# EUROPÄISCHE PATENTSCHRIFT

(11) **EP 2 059 870 B1**
(45) Veröffentlichungstag und Bekanntmachung des Hinweises auf die Patenterteilung: **13.04.2016**
(21) Anmeldenummer: 07803125.9
(22) Anmeldetag: 31.08.2007
(51) Int. Cl.: G06F 9/44, G05B 19/042

(54) **VERFAHREN ZUR ERZEUGUNG VON KONSISTENTEN GERÄTESPEZIFISCHEN SOFTWAREKOMPONENTEN FÜR FELDGERÄTE DER AUTOMATISIERUNGSTECHNIK**
METHOD FOR THE PRODUCTION OF CONSISTENT, DEVICE-SPECIFIC SOFTWARE COMPONENTS FOR FIELD DEVICES OF AUTOMATION TECHNOLOGY
PROCÉDÉ POUR GÉNÉRER DES COMPOSANTS LOGICIELS STABLES PROPRES À L'APPAREIL POUR DES APPAREILS DE CHAMP DE LA TECHNIQUE D'AUTOMATISATION

(30) Priorität: 08.09.2006 DE 102006042805
(43) Veröffentlichungstag der Anmeldung: 20.05.2009
(73) Patentinhaber: Endress+Hauser GmbH+Co. KG, 79689 Maulburg (DE)
(72) Erfinder: DE GROOT, Vincent, 68300 St. Louis (FR); VON STEIN, Bert, 79669 Zell im Wiesental (DE); SEGER, Andrea, 79669 Zell im Wiesental (DE); BARET, Marc, F-68680 Kembs (FR); LEFEBVRE, Martine, F-68730 Blotzheim (FR)
(74) Vertreter: Andres, Angelika Maria
(86) Internationale Anmeldenummer: PCT/EP2007/059138
(87) Internationale Veröffentlichungsnummer: WO 2008/028874

(56) Entgegenhaltungen:
- WO-A-03/029907
- WO-A-03/056423
- WO-A-2004/046837
- DE-A1- 10 241 543

## Beschreibung

Die Erfindung betrifft ein Verfahren zur Erzeugung von konsistenten gerätespezifischen Softwarekomponenten für Feldgeräte der Automatisierungstechnik gemäß dem Oberbegriff des Anspruchs 1. Ein vergleichbares Verfahren ist aus dem WO 03/056423 bekannt.

In der Automatisierungstechnik, insbesondere in der Prozessautomatisierungstechnik werden vielfach Feldgeräte eingesetzt, die zur Erfassung und/oder Beeinflussung von Prozessvariablen dienen. Beispiele für derartige Feldgeräte sind Füllstandsmessgeräte, Massedurchflussmessgeräte, Druck- und Temperaturmessgeräte etc., die als Sensoren die entsprechenden Prozessvariablen Füllstand, Durchfluss, Druck bzw. Temperatur erfassen. Zur Beeinflussung von Prozessvariablen dienen Aktoren, die zum Beispiel als Ventile den Durchfluss einer Flüssigkeit in einem Rohrleitungsabschnitt oder als Pumpen den Füllstand in einem Behälter beeinflussen.

Eine Vielzahl solcher Feldgeräte wird von der Firmengruppe Endress+Hauser hergestellt und vertrieben.

Bei einem bestimmten Sensortyp, zum Beispiel einem Füllstandssensor werden unterschiedliche Messprinzipien, wie Mikrowelle, geführte Mikrowelle, Ultraschall, Kapazität, hydrostatischer Druck, Differenzdruck, Radiometrie, Vibronik, Leitfähigkeit eingesetzt. Viele dieser Feldgeräte werden dem Anwender in unterschiedlichen Varianten zur Verfügung gestellt, um eine anwendungsspezifische Anpassung zu gewährleisten. Neben der anwendungsspezifischen Anpassung ist häufig auch noch die Integration in vorhandene Automatisierungssysteme notwendig.

In der Regel sind Feldgeräte in Automatisierungssystemen über Kommunikationsnetzwerke, die auf der Basis von Profibus, Foundation Fieldbus, HART, etc. arbeiten mit übergeordneten Einheiten (zum Beispiel Leitsysteme, Steuereinheiten) verbunden. Diese übergeordneten Einheiten dienen zur Prozesssteuerung, Prozessvisualisierung, Prozessüberwachung sowie zur Inbetriebnahme und zum Bedienen der Feldgeräte.

Zum Bedienen und zur Inbetriebnahme der Feldgeräte sind entsprechende Bedienprogramme notwendig (zum Beispiel Fieldcare Endress+Hauser; Packware, AMS; Emerson; Simatic PDM; Siemens). Die Feldgeräte weisen hierfür offene Feldbusschnittstellen oder proprietäre Kommunikationsschnittstellen auf.

Zur Anlagensteuerung und -überwachung von größeren Anlagen dienen so genannte Leitsysteme, wie Simatic PCS 7, Siemens; Freelance, ABB und Delta V, Emerson.

Feldgerätehersteller müssen eine Vielzahl unterschiedlicher Feldgerätevarianten anbieten, um den unterschiedlichen Kundenwünschen zu entsprechen.

Die grundsätzlichen Funktionsprinzipien bei Feldgeräten sind insbesondere bei den Sensoren gleich: Eine physikalische Messgröße wird ermittelt, umgerechnet und an eine übergeordnete Einheit weitergeleitet oder direkt am Feldgerät mittels einer Vorortanzeige angezeigt.

Aufgrund der verschiedenen Anwendungsfälle, der verschiedenen Messprinzipien, der unterschiedlichen Schnittstellen und der sprachlichen Vielfalt in der Menüführung der Bediensysteme gibt es eine relativ große Variantenvielzahl für jedes Feldgerät.

Diese Variantevielfalt bedeutet für einen Feldgerätehersteller insbesondere im Bereich der Softwareentwicklung einen hohen Entwicklungsaufwand und auch über den gesamten Lebensdauerzyklus eines Gerätes einen erheblichen Pflegeaufwand der bereits eingesetzten Software.

Diese Softwareentwicklung betrifft neben den Gerätebeschreibungen für unterschiedliche Bussystem (HART, Profibus, Foundation Fieldbus) bzw. für unterschiedliche Bedienwerkzeuge (PDM, Siemens; AMS Emerson; FieldCare Endress + Hauser) auch gewisse Bereiche der Firmware (Parametereigenschaften, Menüstruktur, Funktionsblöcke), sowie die Dokumentation (Parameterliste, Alarmlisten, Betriebsanleitungen BA, Technische Information TI, etc.) und Test-/Entwicklungstools.

Alle diese unterschiedlichen Softwareentwicklungen werden nachfolgend unter dem Begriff Softwarekomponenten zusammengefasst.

Zu einer bestimmten Feldgerätevariante gibt es deshalb mehrere Softwarekomponenten z. B. die Gerätebeschreibungen für die Bussysteme, die Menüstruktur des Bedienmenüs.

Bei der Erzeugung dieser unterschiedlichen Softwarekomponenten werden heutzutage meist unterschiedliche Ausgangsdokumente eingesetzt.

Die Entwickler für die Gerätebeschreibungen arbeiten mit einer bestimmten Spezifikation für eine Feldgerätevariante, die Entwickler für die Firmware verwenden eine andere Spezifikation für die gleiche Varianten und die Entwickler für die Tools verwenden wieder eine andere Spezifikation.

Dies hat zur Folge, dass die unterschiedlichen Softwarekomponenten nicht konsistent sind.

Änderungen an einer Feldgerätevariante müssen bei jeder einzelnen Softwarekomponente nachgepflegt werden. Fehler in einzelnen Softwarekomponenten müssen ebenfalls aufwendig von Hand einzeln behoben werden.

Dies bedeutet auf der Seite des Feldgeräteherstellers wie bereits erwähnt einen enormen Entwicklungsaufwand und Pflegeaufwand.

Aufgabe der Erfindung ist es deshalb, ein Verfahren zur Erzeugung von konsistenten Softwarekomponenten anzugeben, das die oben genannten Nachteile nicht mehr aufweist, das insbesondere die Konsistenz der Softwarekomponenten gewährleistet, das einfach und kostengünstig durchführbar ist.

Gelöst wird diese Aufgabe durch die im Anspruch 1 angegebenen Verfahrensschritte.

Die wesentliche Idee der Erfindung besteht darin, die Softwarekomponenten für eine Feldgerätevariante mit Hilfe eines Generatorprogramms für Softwarekomponenten aus einem Parametersatz, der die Funktionalität der entsprechenden Feldgerätevariante beschreibt, zu erzeugen.

Da die verschiedenen Softwarekomponenten von einer einzigen Quelle, dem entsprechenden Parametersatz für die Feldgerätevariante abgeleitet werden (Single Source-Prinzip), ist die Konsistenz der Softwarekomponenten gewährleistet.

Vorteilhafte Weiterentwicklungen der Erfindung sind in den Unteransprüchen angegeben.

Nachfolgend ist die Erfindung anhand eines in der Zeichnung dargestellten Ausführungsbeispiels näher erläutert.

Es zeigen:
Fig. 1 schematische Darstellung der Hardware und Softwarestruktur für das erfindungsgemäße Verfahren
Fig. 2 Browser-Eingabemaske für die Eingabe von Parametersätzen, die die Funktionalität von Feldgerätevariante beschreiben.
Fig. 3 Blockdiagramm eines Feldgerätes

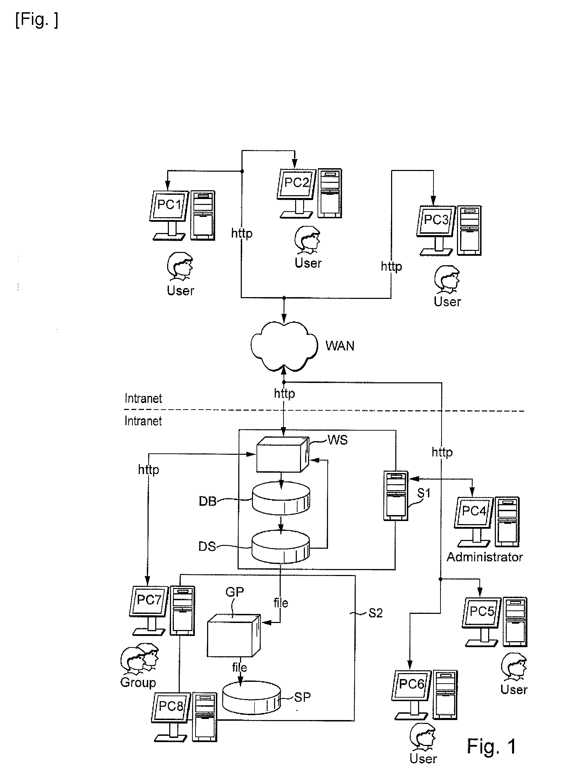

In Fig. 1 ist als Basiskomponente die für die Erzeugung der konsistenten gerätespezifischen Softwarekomponenten benötigt wird, ein Server S1 schematisch dargestellt. Der Server S1 umfasst einen Webserver WS, der mit einer Datenbank DB verbunden ist. Die Ausgabe der Datenbank DB erfolgt in einem Dateiserver DS. Auf einem weiteren Server S2, der mit dem Server S1 verbunden ist, ist ein Generatorprogramm GP installiert, dessen Ausgabe in eine Speichereinheit SP weitergeleitet wird.

Der Server S1 ist mit mehreren PC-Einheiten PC1, PC2 und PC3 über ein Netzwerk WAN z. B. das Internet verbunden.

Weiterhin ist der Server S1 noch über ein Intranet mit weiteren PC-Einheiten verbunden.

An den Server S2 sind ebenfalls PC-Einheiten angeschlossen.

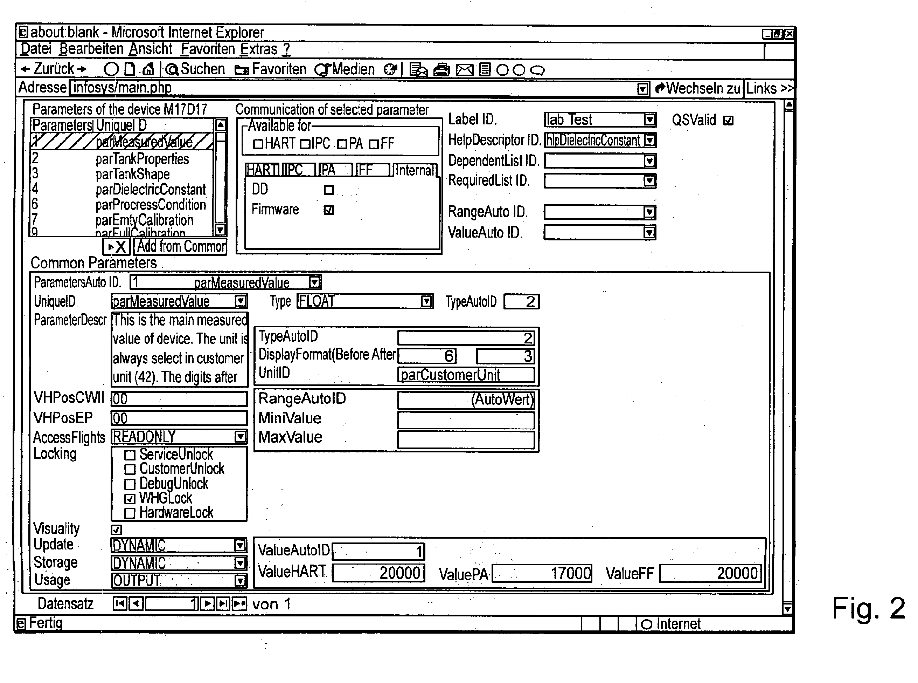

Nachfolgend ist das erfindungsgemäße Verfahren näher erläutert. Gemäß Verfahrensschritt a) erfolgt am Anfang des erfindungsgemäßen Verfahrens die Erstellung einer strukturierten Datenquelle mit gerätespezifischen Parametersätzen. Die Eingabe eines gerätespezifischen Parametersatzes, der die Funktionalität einer Feldgerätevariante bestimmt, erfolgt mit Hilfe einer Eingabemaske, wie sie in Fig. 2 dargestellt ist.

Das angegebene Beispiel M17D17 betrifft konkret das Produkt Prosonic M der Fa. Endress+Hauser. M17D17 ist die HART-Identifikation (HART-ID) des betreffenden Geräts.

In einem Verfahrensschritt b) wird ein einem gerätespezifischen Parametersatz zugeordneter gerätespezifischer Datensatz an das Generatorprogramm GP übertragen. Dabei kann der gerätespezifische Datensatz mit dem gerätespezifischen Parametersatz identisch sein, oder ein XML-Datensatz sein, der über eine entsprechende Umwandlung gewonnen wurde.

In einem Verfahrensschritt c) wird der Datensatz mit Hilfe des Generatorprogramm GP verarbeitet. Das Generatorprogramm GP erzeugt dabei mehrere gerätespezifische Softwarekomponenten aus dem angegebenen Datensatz. In einem letzten Verfahrensschritt d) werden die gerätespezifischen Softwarekomponenten in einer Speichereinheit SP abgespeichert.

Dadurch, dass die Softwarekomponenten aus einem Parametersatz für eine ganz spezifische Feldgerätevariante erzeugt werden, ist die Konsistenz aller Softwarekomponenten mit Sicherheit gegeben. Das erfindungsgemäße Verfahren vereinfacht die Arbeit bei der Erstellung der gerätespezifischen Softwarekomponenten erheblich. Insbesondere die Fehlerbehebung sowie die Pflege der Softwarekomponenten über die Lebensdauer eines Feldgerätes werden dadurch erheblich vereinfacht.

Bei der strukturierten Datenquelle kann es sich zum Beispiel um eine Datenbank handeln.

In einer vorteilhaften Weiterentwicklung der Erfindung ist der Datenbank DB ein Webserver vorgeschaltet. Somit kann die in Fig. 2 dargestellte Eingabemaske verschiedenen Anwendern (User) über ein Netzwerk (zum Beispiel das Internet WAN Wide Area Network) zur Verfügung gestellt werden.

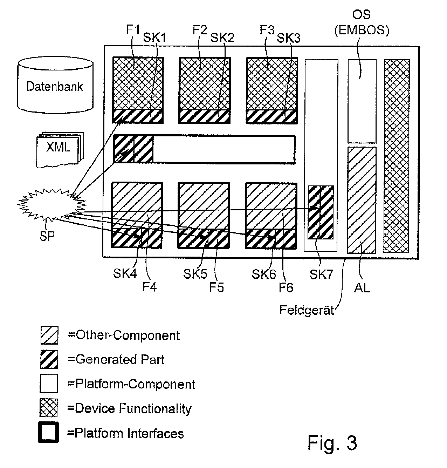

In Fig. 3 ist die Verwendung der mit dem erfindungsgemäßen Verfahren erzeugten Softwarekomponenten in einem schematisch dargestellten Feldgerät erläutert.

Das Feldgerät weist verschiedene Funktionsblöcke auf. Neben anwendungsorientierten Funktionsblöcken sind noch ein Anzeigefunktionsblock (Display), ein Kommunikationsfunktionsblock (Fieldbus Communication) und ein Service-, Entwicklungs- und Herstellungsfunktionsblock (Service, Development, Manufacturing) auf. Die Funktionsblöcke F1, F2, F3 bestimmen die Funktionalität des Gerätes. Die Steuerung erfolgt über einen Funktionsblock F4 (Function block shell)

Die aus der Speichereinheit SP entnommenen Softwarekomponenten SK1- SK7 für die betreffende Feldgerätevariante sind gestrichelt dargestellt. Die unterschiedliche Schraffur der Softwarekomponenten SK4 bis SK8 ist darin begründet, dass Teile dieser Softwarekomponenten plattformspezifisch sind und andere Teile tatsächlich auf die entsprechende Gerätevariante abgestimmt sind.

Weiterhin ist Service-Funktionseinheit (Plattform-Services) dargestellt, die für eine Feldgeräte-Plattform identisch sind.

Als Basis-Software wird im Feldgerät ein Betriebssystem OS, zum Beispiel embOS, eingesetzt.

Weiterhin ist noch ein Abstraction-Layer AL vorgesehen, über den der Zugriff auf die Hardware HW des Feldgerätes folgt.

Weiterhin sind in Fig. 3 nochmals die wesentlichen Merkmale und die Gründe die für das erfindungsgemäße Verfahren sprechen stichpunktartig angegeben.

Durch das erfindungsgemäße Verfahren ist bei einem Feldgerätehersteller die Variantenvielfalt bei der Geräte Software besser zu handhaben außerdem wird die Komplexität bei der Entwicklung der Geräte Software erheblich verringert. Mit dem verfahren ist eine schnellere Markteinführung von Feldgeräten möglich. Außerdem erlaubt es eine einfachere und schnellere Anpassung von Feldgeräten an kundenspezifische Wünsche.

Auch unter Sicherheitsaspekten weist das Verfahren erhebliche Vorteile auf. Fehler können schneller behoben werden. Fehlfunktionen in der Menüführung, die zu einer fehlerhaften Bedienung führen können, können besser und zuverlässiger behoben werden. Eine fehlerhafte Bedienung aufgrund einer fehlerhaften Software könnte bei bestimmten Anwendungen unter Umständen sogar zu einem Anlagestillstand führen.

## Patentansprüche

1. Verfahren zur Erzeugung von mehreren konsistenten gerätespezifischen Softwarekomponenten (SK1-SK7) für Feldgeräte der Automatisierungstechnik aus einem Parametersatz, der der Funktionalität einer Feldgerätevariante zugeordnet ist, mit den folgenden Verfahrenschritten:
a) Erstellung einer strukturierten Datenquelle mit geräte-spezifischen Parametersätzen, wobei jeder Parametersatz der Funktionalität einer Feldgerätevariante zugeordnet ist, wobei der der jeweiligen Feldgerätevariante zugeordnete Parametersatz als einzige Quelle verwendet wird, aus der die Softwarekomponenten (SK1-SK7) abgeleitet werden und wobei die Eingabe des gerätespezifischen Parametersatzes mit Hilfe einer Eingabemaske erfolgt;
b) Übergabe eines dem gerätespezifischen Parametersatz zugeordneten gerätespezifischen Datensatzes an ein Generatorprogramm für die Softwarekomponenten (SK1-SK7);
c) Erzeugung der gerätespezifischen Softwarekomponenten (SK1-SK7) aus dem Datensatz mit Hilfe des Generatorprogramms für die Softwarekomponenten (SK1-SK7);
d) Speicherung der gerätespezifischen Softwarekomponenten (SK1-SK7) in einer Speichereinheit (SP).

2. Verfahren nach Anspruch 1, wobei der gerätespezifische Parametersatz in einen XML-Datensatz umgewandelt wird

3. Verfahren nach einem der vorhergehenden Ansprüche, wobei als strukturierte Datenquelle eine Datenbank verwendet wird.

4. Verfahren nach Anspruch 3, wobei die Datenbank mit einem Web-Server verbunden wird, der über eine feldgeräteplattform-spezifische Eingabemaske die gerätespezifische Parametereingabe ermöglicht.

5. Verfahren nach einem der vorhergehenden Ansprüche, wobei als gerätespezifischen Softwarekomponenten (SK1-SK7) z. B. Gerätebeschreibungen für unterschiedliche Bussysteme bzw. für unterschiedliche Bedienwerkzeuge, Parameterstrukturen, Menüstrukturen und Funktionsblöcke als gewisse Bereiche der Firmware des Feldgerätetyps, Dokumentationen, wie Parameterlisten, Alarmlisten, Betriebsanleitungen und technische Informationen, und Test/Entwicklungstools vewendet werden.

## Claims

1. Procedure to generate several consistent device-specific software components (SK1-SK7) for field devices in automation engineering from a set of parameters which is assigned to the functionality of a field device version, said procedure comprising the following steps:
a) Creation of a structured data source with device-specific parameter sets wherein every parameter set is assigned to the functionality of a field device version, wherein the parameter set assigned to the particular field device version is used as the only source from which the software components (SK1-SK7) are derived and wherein the device-specific parameter set is entered using an input mask;
b) Transfer of a device-specific data set assigned to the device-specific parameter set to a generator program for the software components (SK1-SK7);
c) Generation of the device-specific software components (SK1-SK7) from the data set using the generator program for the software components (SK1-SK7);
d) Saving of the device-specific software components (SK1-SK7) in a memory unit (SP).

2. Procedure as claimed in Claim 1, wherein the device-specific parameter set is converted to an XML data set.

3. Procedure as claimed in one of the previous claims wherein a database is used as the structured data source.

4. Procedure as claimed in Claim 3, wherein the database is connected to a Web server which enables the device-specific parameter entry via an input mask specific to the field device platform.

5. Procedure as claimed in one of the previous claims, wherein examples of elements that are used as device-specific software components include device descriptions for different bus systems or for different operating tools, parameter structures, menu structures and function blocks as certain areas of the firmware of the field device type, documentation such as parameter lists, alarm lists, operating manuals and technical information, and testing/development tools.

## Revendications

1. Procédé destiné à la génération de plusieurs composants logiciels (SK1-SK7) cohérents, spécifiques aux appareils, destinés aux appareils de terrain de la technique d'automatisation, à partir d'un jeu de paramètres, qui est attribué à la fonctionnalité d'une variante d'appareil de terrain, avec les étapes de procédé suivantes :
a) Création d'une source de données structurée avec des jeux de paramètres spécifiques aux appareils, chaque jeu de paramètres étant attribué à la fonctionnalité d'une variante d'appareil de terrain, le jeu de paramètres attribué à la variante d'appareil de terrain respective étant utilisé comme source unique, à partir de laquelle les composants logiciels (SK1-SK7) sont dérivés et l'entrée du jeu de paramètres spécifique aux appareils étant réalisée à l'aide d'un masque d'entrée ;
b) Transfert d'un jeu de données spécifique aux appareils attribué au jeu de paramètres spécifique aux appareils à un programme générateur pour les composants logiciels (SK1-SK7) ;
c) Génération des composants logiciels (SK1-SK7) à partir du jeu de données à l'aide du programme générateur pour les composants logiciels (SK1-SK7) ;
d) Enregistrement des composants logiciels (SK1-SK7) spécifiques aux appareils dans une unité de mémoire (SP).

2. Procédé selon la revendication 1, pour lequel le jeu de paramètres spécifique aux appareils est converti en un jeu de données XML.

3. Procédé selon l'une des revendications précédentes, pour lequel on utilise une base de données en tant que source de données structurée.

4. Procédé selon la revendication 3, pour lequel la base de données est reliée avec un serveur Web, qui permet l'entrée de paramètres spécifiques aux appareils par l'intermédiaire d'un masque d'entrée spécifique à la plate-forme d'appareil de terrain.

5. Procédé selon l'une des revendications précédentes, pour lequel on utilise en tant que composants logiciels (SK1- SK7) spécifiques aux appareils, par exemple, des descriptions d'appareil pour différents systèmes de bus ou pour différents outils de configuration, structures de paramètres, structures de menus et blocs fonctionnels en tant que zones définies du micrologiciel du type de l'appareil de terrain, documentations telles que listes de paramètres, listes d'alarmes, manuels de mise en service et informations techniques, et outils de test / développement.
